# EUROPÄISCHE PATENTSCHRIFT

(11) **EP 1 247 763 B1**
(45) Veröffentlichungstag und Bekanntmachung des Hinweises auf die Patenterteilung: **18.07.2007**
(21) Anmeldenummer: 02003535.8
(22) Anmeldetag: 15.02.2002
(51) Int. Cl.: B65D 90/24

(54) **Lagerbehälter für wassergefährdende Flüssigkeiten**
Container for water polluting liquids
Conteneur pour liquides pouvant contaminer l'eau

(30) Priorität: 05.03.2001 DE 10110540
(43) Veröffentlichungstag der Anmeldung: 09.10.2002
(73) Patentinhaber: RUHR OEL GmbH, 45896 Gelsenkirchen (DE)
(72) Erfinder: Nagler, Norbert, 45721 Haltern (DE); Stolze, Reiner, 46282 Dorsten (DE); Wychlacz, Werner, 46514 Schermbeck (DE)
(74) Vertreter: Berg, Dirk

(56) Entgegenhaltungen:
- AT-B- 322 445
- GB-A- 1 440 187
- US-A- 4 404 988
- US-A- 4 425 933

## Beschreibung

Die Erfindung betrifft einen Lagerbehälter für wassergefährdende Flüssigkeiten mit einem Leckageerkennungs- und - Rückhaltesystem.

Aufgrund gesetzlicher oder behördlicher Vorschriften sind Lagerbehälter für wassergefährdende Flüssigkeiten vielfach mit Auffangräumen ausgestattet, welche in der Lage sind, daß maximale Lagervolumen des Tanks aufzunehmen. Diese Auffangräume sind aus Beton oder aus bindigem Bodem, ggf. auch aus Stahl. Auch mit Kunststofffolien ausgekleidete Auffangräume sind bekannt. Die Größe der Auffangräume erfordert eine kostenintensive Instandhaltung. Bei Produktaustritten am Tank breitet sich wassergefährdende Flüssigkeit über eine große Oberfläche aus und bedingt im Regelfall eine Alarmierung nach Austreten größerer Mengen des Lagergutes. Aufgrund der Anforderungen des Gewässerschutzes ist dann eine umgehende Reinigung des Auffangraumes und Entsorgung der ausgetretenen Flüssigkeit sowie ggf. des Auffangraummaterials erforderlich.

Aus der DE-C-196 00 970 ist eine Tankmantellecküberwachung insbesondere für Flachtankbauten bekannt, die ein außenseitig des Tankmantels angeordnetes Sensorkabel aufweist. Ein höhenmäßig mindestens teilweise unterhalb des Bodens des Flachtankbauwerks angeordneter und dessen außenumfänglich umgebener ringförmiger Auffangraum ist über eine ein Gefälle aufweisende Kragung mit dem unteren Ende des Außenmantels verbunden. Das Sensorkabel ist auf der Kragung oder im Bodenbereich des Auffangraumes angeordnet. Bei einer Leckage wird durch einen entsprechenden Kontakt der austretenden Flüssigkeit mit dem Sensorkabel ein Leckagealarm ausgelöst. Zumindest aus Kostengründen wird es als nachteilig angesehen, dass die Länge des Sensorkabels zumindest dem Außenumfang des Tankes entsprechen muss, da es vollständig um diesen herumgelegt werden muss. Des Weiteren wird als nachteilig angesehen, dass im Leckagefall das Sensorkabel zumindest im Kontaktbereich komplett ausgetauscht werden muss.

Aufgabe der Erfindung ist es, einen Lagerbehälter mit einem Leckageerkennungs- und -rückhaltesystem zur Verfügung zu stellen, welcher eine kurzfristige Alarmierung gewährleistet. Des weiteren sollen das Auffangvolumen im Interesse einer geringen Ausbreitung der wassergefährdenden Flüssigkeit sowie die Kosten für Bau und Instandhaltung minimiert werden.

Diese Aufgabe wird gelöst durch einen Lagerbehälter für wassergefährdende Flüssigkeiten, der mit einem Leckageerkennungs- und -rückhaltesystem ausgestattet ist, mit folgenden Merkmalen:
- eine einen Tank umgebende Rinne, die sich direkt an der Außenwand des Lagerbehälters anschließt und zum Auffangen ausgetretener Flüssigkeit dient,
- mindestens einen Rinnenablauf,
- mindestens einen Flüssigkeitssammelbehälter sowie
- mindestens ein Detektionssystem für die wassergefährdenden Flüssigkeiten,
wobei der Rinnenablauf
- geeignet ist, die in der Rinne (4) aufgefangene Flüssigkeit in den Flüssigkeitssammelbehälter (6) zu führen, welcher mit dem Detektionssystem (12) ausgestattet ist.
- mit einer Sperre (7) versehen ist, die geschlossen wird, wenn das Detektionssystem (12) ein positives Signal absetzt.

Vorzugsweise handelt es ich bei den Tanks um solche mit zylindrischer Form, insbesondere solche, bei denen die Mittelachse des Zylinders vertikal ausgerichtet ist. Derartige Tanks bestehen üblicherweise aus einem Boden, den vertikalen Seitenwänden, auch Zylindermantel oder kurz Mantel genannt, sowie einem Dach. Sowohl Schwimmdächer als auch Festdächer sind möglich. Bevorzugt sind Flachbodentanks.

Bei derartigen Tanks schließt sich der Boden vorzugsweise direkt an den Boden des Lagerbehälters an bzw. geht in diesen über. Der Anschluß des Bodens der Rinne an den Boden des Lagerbehälters muß flüssigkeitsdicht ausgeführt sein.

Die innere Seitenwand der Rinne wird durch die Außenwand des Lagerbehälters bzw. durch den Tankmantel gebildet. Vorzugsweise hat die Rinne einen U-förmigen Querschnitt. Die äußere Wand der Rinne sowie der Boden werden bevorzugt aus Stahl oder Kunststoffen, insbesondere faserverstärkten Kunststoffen gefertigt. Das die Rinne bildende Material sollte gegenüber der wassergefährdenden Flüssigkeit beständig sein.

Für den Fall, daß der Lagerbehälter ein Festdachtank ist, werden auf dieses Festdach fallende Niederschlagsmengen über eine geeignete Vorrichtung so aufgefangen und abgeleitet, daß diese nicht in die Rinne gelangen. Hierzu kann als eine bevorzugte Ausführungsform am Tankdach ein Rinnensystem installiert werden, etwa in der Weise, daß der Tankmantel über das Tankdach erhöht wird. Über einen Ablaß, z. B. eine Rohrleitung, kann dann die Ableitung der Niederschlagsmassen außerhalb der Rinne erfolgen. Mit dieser Konstruktion wird der Flüssigkeitssammelbehälter und damit das Detektionssystem von Niederschlagswasser aus dem Dachbereich des Lagerbehälters freigehalten, d. h. es entfällt die Berücksichtigung der auf das Tankdach fallenden Niederschlagsmengen für die Bemessung des Rückhaltevolumens des Auffangbehälters bzw. der Rinne.

Der wesentliche Vorteil der vorliegenden Erfindung besteht darin, daß das Auffangvolumen der Rinne im Gegensatz zu den aus dem Stand der Technik bekannten Auffangräumen wesentlich kleiner ist als das maximale Füllvolumen des Lagerbehälters. Das erforderliche Rückhaltevolumen der Rinne ist nicht alleine eine Funktion der Größe des Lagerbehälters bzw. seines maximalen Füllvolumens, sondern wird im Sinne der Minimierung des Sicherheitsrisikos im wesentlichen mitbestimmt durch die Annahme einer fiktiven Leckfläche einerseits sowie durch die vorhandene Infrastruktur andererseits, durch die es möglich ist, innerhalb eines bestimmten Zeitraumes entsprechende Gegenmaßnahmen zu ergreifen. Zur Infrastruktur gehört das Vorhalten geeigneter Ausrüstung sowie eine angemessene personelle Ausstattung, damit im Falle eines tatsächlichen Produktaustritts entsprechende organisatorische und logistische Maßnahmen eingeleitet werden können, um die ausgetretene Flüssigkeit umgehend sachgerecht zu entfernen, die betroffenen Anlagen evtl. zu leeren und die Leckage zu beseitigen.

Die Rinne ist mit einem Rinnenablauf versehen, über den Flüssigkeit aus der Rinne zunächst in einen Flüssigkeitssammelbehälter gelangt. Dieser ist mit einem Detektionssystem ausgestattet. Sammelbehälter und Abfluß können beheizt sein, damit sie im Winter eisfrei gehalten werden können. Der Flüssigkeitssammelbehälter ist vorzugsweise mit einem hoch gelegenen Ablauf bzw. Überlauf versehen. Damit keine wassergefährdenden Flüssigkeiten - sofern diese nicht mit Wasser mischbar sind - zu dem Ablauf gelangen können, kann in dem Flüssigkeitssammelbehälter zwischen dem Teil, in dem die Flüssigkeit aus der Rinne zugeführt wird und dem Teil, in dem sich der Ablauf befindet, eine Kaskadentrennwand eingezogen werden.

Die Positionierung der Trennwand ist davon abhängig, ob die ausgetretene, mit Wasser nicht mischbare Flüssigkeit auf Wasser aufschwimmt oder absinkt. Der Flüssigkeitssammelbehälter ist mit einem Detektionssystem ausgestattet, welches sich vorzugsweise im Flüssigkeitssammelbehälter befindet. Bei diesem Detektionssystem handelt es sich vorzugsweise um ein solches zur Detektion nicht leitfähiger, auf Wasser aufschwimmenden, organischen Flüssigkeiten, falls im Tank Mineralöl oder Mineralölprodukte gelagert werden. Der Rinnenablauf ist mit einer Sperre versehen, die automatisch geschlossen wird, wenn das Detektionssystem ein positives Signal absetzt. Als Detektionssystem können kommerziell erhältliche Systeme eingesetzt werden. Geeignet ist beispielsweise ein System aus Schwimmkörpern und einem Sensor, dessen elektrischer Wiederstand sich verändert, wenn durch auf dem Wasser aufschwimmende Leichtflüssigkeit sich die Position des Schwimmkörpers verändert.

In der Praxis setzt ein solches Detektionssystem bei einer bestimmten Schichtdicke von beispielsweise 4-6 mm ein positives Signal ab, wodurch üblicherweise ein Alarm, entweder lokal oder in einer Meßwarte ausgelöst wird. Gleichzeitig wird die im Rinnenablauf befindliche Sperre geschlossen. Dadurch kann keine wassergefährdende Flüssigkeit aus der Rinne abfließen. Aufgrund des Alarms wird das Betriebspersonal eine Kontrolle des Lagerbehälters durchführen. Im Falle eines tatsächlichen Austritts von Flüssigkeit können entsprechende organisatorische und logistische Maßnahmen eingeleitet werden, um die ausgetretene Flüssigkeit umgehend zu entfernen, die betroffenen Anlagenteile zu entleeren und die Leckage zu beseitigen. Vorzugsweise ist die Rinne mit Vorrichtungen versehen, die eine umwelt- und wassergefährdungsfreie Entfernung der in der Rinne gesammelten Leckageflüssigkeit ermöglichen. Im Vergleich zu Füllvolumina von bis zu ca. 100.000 m³ bei großen Flachbodentanks ist das Leckageerkennungssystem in der Lage, bereits kleine Mengen von austretenden Flüssigkeiten, nämlich weniger als 10 l zu detektieren.

Die am Tank befindlichen Anschlußstücke für Leitungen zur Zu- und Abfuhr von Produkten oder zu Anschluß sonstiger Armaturen sind vorzugsweise vertikal oberhalb der Rinne angeordnet, so daß im Falle von Undichtigkeiten dieser Anschlüsse sich die austretende Flüssigkeit ebenfalls in der Rinne sammelt. Damit diese austretende Flüssigkeit möglichst schnell detektiert wird, befinden sich diese Anschlußstücke vorzugsweise in räumlicher Nähe zu dem Rinnenablaß bzw. zum Flüssigkeitssammelbehälter. Vorzugsweise sind mehrere Flüssigkeitssammelbehälter um den Tank angeordnet. Damit wird die Wegstrecke zwischen einer möglichen Leckagestelle und einem Sammelbehälter verkürzt und somit auch der Zeitraum zwischen dem Austritt der wassergefährdenden Flüssigkeit und ihrer Detektion.

Konstruktionsbedingt erfaßt die erfindungsgemäße Vorrichtung in hervorragender Weise Leckagen im Bereich des Tankmantels und ist in der Lage, die austretenden Flüssigkeitsmengen bis zur Durchführung von Gegenmaßnahmen aufzufangen und zurückzuhalten.

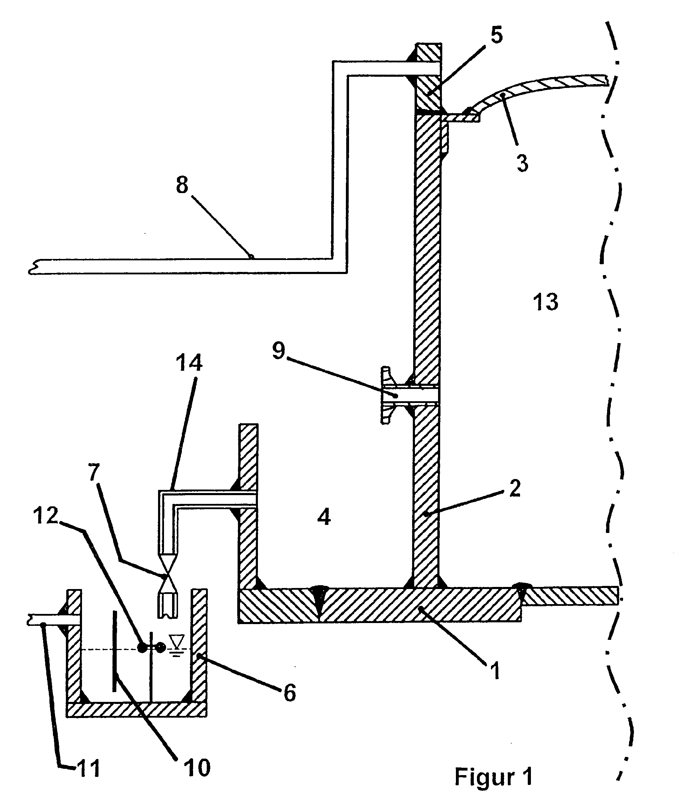

**Figur 1** zeigt eine erfindungsgemäße Vorrichtung im Schnitt. Auf der rechten Seite ist ein Teil eines Tanks (13) dargestellt mit einem Tankboden (1), einer Tankwandung (2) und einem Tankdach (3). Es handelt sich hierbei um einen Flachbodentank mit einem Festdach. Auf der Außenseite des Tanks, hier auf der Abbildung links der Tankwand, befindet sich die Auffangrinne (4), diese ist U-förmig ausgebildet. Die rechte Wand der Rinne wird gebildet durch die Tankwand (2). Der Boden der Rinne ist eine Fortführung des Tankbodens (1). Der linke Schenkel des U's wird gebildet durch eine senkrecht auf dem Boden befestigte Seitenwand. In dieser ist ein Ablaß (14) mit einer Sperre (7) eingefügt. Über diesen Ablaß wird bei offener Sperre Flüssigkeit aus der Rinne in einen Auffangbehälter (6) geleitet. Dieser ist mit einem Detektionssystem (12) ausgerüstet. Damit keine aufschwimmende Leichtflüssigkeit durch den Ablauf (11) aus dem Sammelbehälter austreten kann, ist in diesem eine Kaskadentrennwand (10) eingebaut. Diese ragt über die Flüssigkeitsoberfläche hinaus, reicht jedoch nicht bis zum Boden. Zum Auffangen des auf dem Festdach niedergehenden Niederschlagwassers ist die Tankwand durch Aufsetzen eines Materialstücks (5) über das Tankdach (3) erhöht. Dadurch kann das auf dem Tankdach niedergehende Niederschlagswasser nicht vom Dach am Tankmantel herunterlaufen, sondern wird zunächst oben auf dem Tankdach gesammelt und dann über eine Rohrleitung (8) vom Tankdach über die Rinne (4) hinweg abgeleitet. In die Seitenwand (2) des Tanks ist ein Anschlußstück (9) angebracht, an dem beispielsweise eine Leitung zum Befüllen oder Entleeren des Tanks angeschlossen werden können.

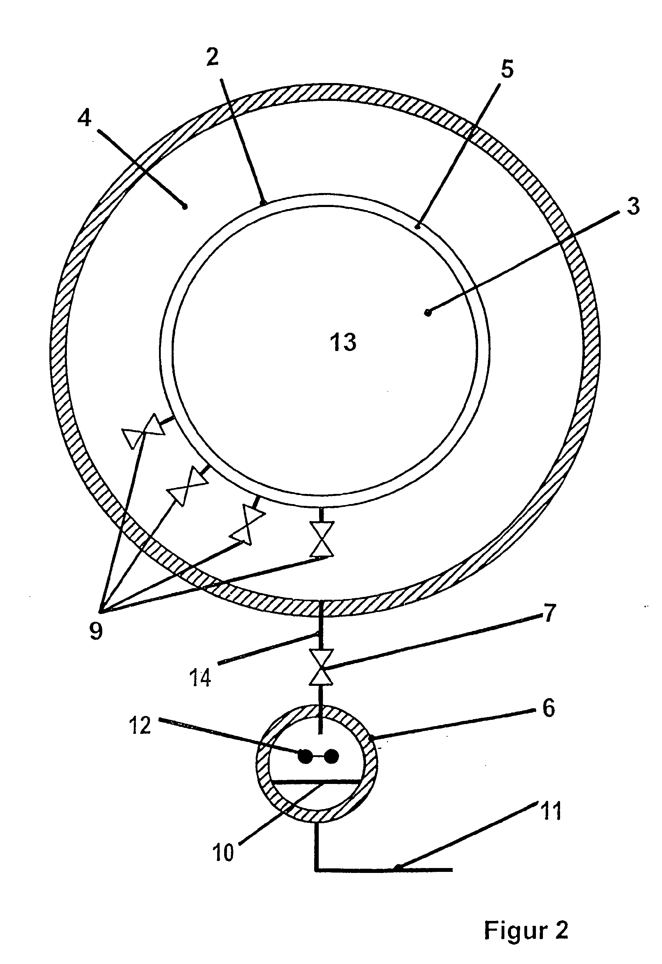

**Figur 2** zeigt eine erfindungsgemäße Vorrichtung in der Draufsicht. Hier sind mehrere Anschlußstücke (9) vorhanden, die so angeordnet sind, daß sie sich in räumlicher Nähe zum Sammelbehälter (6) befinden.

## Patentansprüche

1. Lagerbehälter für wassergefährdende Flüssigkeiten, der mit einem Leckageerkennungs- und -rückhaltesystem ausgestattet ist, mit folgenden Merkmalen:
• eine einen Tank (13) umgebende Rinne (4), die sich direkt an der Außenwand (2) des Lagerbehälters anschließt und zum Auffangen ausgetretener Flüssigkeit dient,
• mindestens einen Rinnenablauf (14),
• mindestens einen Flüssigkeitssammelbehälter (6) sowie
• mindestens ein Detektionssystem (12) für die wassergefährdenden Flüssigkeiten, wobei der Rinnenablauf (14)
• geeignet ist, die in der Rinne (4) aufgefangene Flüssigkeit in den Flüssigkeitssammelbehälter (6) zu führen, welcher mit dem Detektionssystem (12) ausgestattet ist, und
• mit einer Sperre (7) versehen ist, die geschlossen wird, wenn das Detektionssystem (12) ein positives Signal absetzt.

2. Lagerbehälter nach Anspruch 1, **dadurch gekennzeichnet, daß** der Tank (13) zylindrisch ist, insbesondere mit einem Flachboden.

3. Lagerbehälter nach mindestens einem der vorstehenden Ansprüche, **dadurch gekennzeichnet, daß** der Boden der Rinne (4) direkt an den Boden (1) des Tanks (13) anschließt.

4. Lagerbehälter nach mindestens einem der vorstehenden Ansprüche, **dadurch gekennzeichnet, daß** der Tank (13) ein Festdachtank ist und eine geeignete Vorrichtung besitzt, um auf das Festdach (3) fallende Niederschlagsmengen so auffangen und ableiten zu können, daß diese nicht in die Rinne (4) gelangen.

5. Lagerbehälter nach mindestens einem der vorstehenden Ansprüche, **dadurch gekennzeichnet, daß** das Auffangvolumen der Rinne (4) kleiner ist als das max. Füllvolumen des Lagerbehälters.

6. Lagerbehälter nach mindestens einem der vorstehenden Ansprüche, **dadurch gekennzeichnet, daß** der Flüssigkeitssammelbehälter (6) mit einem Ablauf (11) und einer Kaskadentrennwand (10) versehen ist.

7. Lagerbehälter nach mindestens einem der vorstehenden Ansprüche, **dadurch gekennzeichnet, daß** der Tank (13) mit mindestens einem Anschlußstück (9) für eine zur Zu- und Abfuhr von Produkten geeignete Leitung oder sonstige Armaturen ausgestattet ist, wobei das Anschlußstück (9) vertikal oberhalb der Rinne (4) angeordnet ist, vorzugsweise in räumlicher Nähe zum Flüssigkeitssammelbehälter (6).

8. Lagerbehälter nach mindestens einem der vorstehenden Ansprüche, **dadurch gekennzeichnet, daß** die Rinne (4) mit einer Vorrichtung zur umwelt- und wassergefährdungsfreien Entfernung der in der Rinne (4) gesammelten Leckageflüssigkeit versehen ist.

9. Lagerbehälter nach mindestens einem der vorstehenden Ansprüche, **dadurch gekennzeichnet, daß** das Detektionssystem (12) zur Detektion nicht leitfähiger, auf Wasser aufschwimmenden, organischen Flüssigkeiten geeignet ist.

## Claims

1. A storage vessel for liquids hazardous to water, which is equipped with a leak recognition and retention system, having the following features:
• a channel (4) surrounding a tank (13), which channel directly adjoins the outer wall (2) of the storage vessel and serves to collect emerging liquid,
• at least one channel outlet (14),
• at least one liquid collecting vessel (6) and
• at least one detection system (12) for the liquids which are hazardous to water,
the channel outlet (14)
• being suitable for guiding the liquid collected in the channel (4) into the liquid collecting vessel (6), which is equipped with the detection system (12), and
• being provided with a blocking means (7) which is closed if the detection system (12) transmits a positive signal.

2. A storage vessel according to Claim 1, **characterised in that** the tank (13) is cylindrical, in particular has a flat base.

3. A storage vessel according to at least one of the preceding claims, **characterised in that** the base of the channel (4) directly adjoins the base (1) of the tank (13).

4. A storage vessel according to at least one of the preceding claims, **characterised in that** the tank (13) is a fixed-roof tank and has a suitable device for collecting and carrying away quantities of precipitation falling onto the fixed roof (3) such that they do not pass into the channel (4).

5. A storage vessel according to at least one of the preceding claims, **characterised in that** the collecting volume of the channel (4) is smaller than the maximum filling volume of the storage vessel.

6. A storage vessel according to at least one of the preceding claims, **characterised in that** the liquid collecting vessel (6) is provided with an outlet (11) and a cascade partition (10).

7. A storage vessel according to at least one of the preceding claims, **characterised in that** the tank (13) is equipped with at least one connection piece (9) for a line suitable for supplying and removing products or for other fittings, the connection piece (9) being arranged vertically above the channel (4), preferably in the physical vicinity of the liquid collecting vessel (6).

8. A storage vessel according to at least one of the preceding claims, **characterised in that** the channel (4) is provided with a device for removing the leaked liquid collected in the channel (4) in a manner non-hazardous to the environment and to water.

9. A storage vessel according to at least one of the preceding claims, **characterised in that** the detection system (12) is suitable for detecting nonconductive organic liquids which float on water.

## Revendications

1. Récipient de stockage pour des liquides pouvant contaminer l'eau, muni d'un système de retenue et de détection de fuite comportant les caractéristiques suivantes :
- une rigole (4) entourant un réservoir (13), et raccordée directement à la paroi extérieure (2) du récipient de stockage et servant à récupérer un liquide échappé,
- au moins une évacuation de rigole (14),
- au moins un récipient collecteur de liquide (6), et
- au moins un système de détection (12) pour les liquides pouvant contaminer l'eau,
- l'évacuation de rigole (14) étant apte à mener le liquide récupéré dans la rigole (4) jusqu'au récipient collecteur de liquide (6) muni du système de détection (12), et
- munie d'une barrière (7) qui est fermée si le système de détection (12) envoie un signal positif.

2. Récipient de stockage selon la revendication 1,
**caractérisé en ce que**
le réservoir (13) est cylindrique, en particulier avec un fond plat.

3. Récipient de stockage selon au moins l'une des revendications précédentes,
**caractérisé en ce que**
le fond de la rigole (4) est raccordé directement au fond (1) du réservoir (13).

4. Récipient de stockage selon au moins l'une des revendications précédentes,
**caractérisé en ce que**
le réservoir (13) est un réservoir à toit fixe et présente un dispositif apte à récupérer et à évacuer des quantités de précipitations tombant sur le toit fixe (3) de sorte que celles-ci n'arrivent pas dans la rigole (4).

5. Récipient de stockage selon au moins l'une des revendications précédentes,
**caractérisé en ce que**
le volume de récupération de la rigole (4) est inférieur au volume de remplissage maximum du récipient de stockage.

6. Récipient de stockage selon au moins l'une des revendications précédentes,
**caractérisé en ce que**
le récipient collecteur de liquide (6) est muni d'une évacuation (11) et d'une cloison à cascade (10).

7. Récipient de stockage selon au moins l'une des revendications précédentes,
**caractérisé en ce que**
le réservoir (13) est muni d'au moins un élément de raccordement (9) pour une conduite ou d'autres ferrures aptes à amener et à évacuer des produits, et l'élément de raccordement (9) est disposé verticalement au-dessus de la rigole (4), de préférence à proximité spatiale du récipient collecteur de liquide (6).

8. Récipient de stockage selon au moins l'une des revendications précédentes,
**caractérisé en ce que**
la rigole (4) est munie d'un dispositif pour supprimer le liquide de fuite collecté dans la rigole (4), sans polluer l'environnement et l'eau.

9. Récipient de stockage selon au moins l'une des revendications précédentes,
**caractérisé en ce que**
le système de détection (12) est apte à détecter des liquides organiques non conducteurs flottant sur l'eau.
